# EUROPEAN PATENT APPLICATION

(11) **EP 1 748 273 A1**
(43) Date of publication of application: **31.01.2007**
(21) Application number: 05016129.8
(22) Date of filing: 25.07.2005
(51) Int. Cl.: F41G 3/08, F41G 1/38

(54) **Telescopic sight and method for automatically compensating for bullet trajectory deviations**

(71) Applicant: Bushnell Performance Optics, Overland Park, KS 66214 (US)
(72) Inventor: Perkins, Williams G., 66216 Lenexa Kanas (US); Cross, John W., Overland Park Kanas 66223 (US); Vermillion, Jordan, Overland Park Kanas 66213 (US)
(74) Representative: UEXKÜLL & STOLBERG

(57) **Abstract**

A telescopic sight (10) for automatically compensating for bullet trajectory deviations is disclosed. The sight (10) includes a user input (20) and an electronic port (22) for communicating ballistic, calibration and user preference information to the sight (10). The sight (10) further includes a ranger finder (24) and an array of ambient condition sensors (26,28,30,32,34,36) for automatically generating target distance information and ambient condition information. A processor (38) uses the ballistic, calibration, user preference, distance and ambient condition information to calculate bullet trajectory deviation compensation information. The processor (38) presents the compensation to the user in the form of a compensation reticle (48) or a compensation value (50).

## Description

### BACKGROUND OF THE INVENTION

### 1. FIELD OF THE INVENTION

The present invention relates to telescopic sights that assist a user in compensating for deviations in a bullet trajectory. More particularly, the present invention relates to a telescopic sight that uses ballistic information, ambient condition information, and target distance information to automatically determine a bullet trajectory deviation.

### 2. DESCRIPTION OF PRIOR ART

Hunters and other shooters commonly seek to improve their shooting accuracy by availing themselves of the latest technology, such as telescopic and holographic sights. Telescopic sights, also known as "scopes" or "riflescopes," magnify a field of view and superimpose a reticle, such as a pair of crosshairs, over the magnified field of view. The reticle indicates a bullet's point of impact, while the magnified field of view makes distanttargets and surrounding objects appear closer.

While scopes have effectively helped shooters improve theiraccuracy, they are susceptible to inaccuracies, particularly as shooting range increases. Such inaccuracies arise from several factors, including scope calibration, ambient factors, and firearm ballistics.

The imperfect nature of scope calibration compromises reticle accuracy at many ranges. When a scope is attached to a firearm, it must be calibrated so that the reticle accurately indicates a point of impact of the bullet. Because the line of sight of a scope does not correspond perfectly with bullet trajectory, a scope is calibrated so that the reticle indicates the point of impact of a bullet at a particular distance from the firearm, a process known as "zeroing." A scope may be zeroed, for example, at a range of 50 or 100 yards. It will be appreciated that when a scope is zeroed, the reticle accurately indicates the point of impact of the bullet only in the absence of arbitrary ambient conditions that affect the trajectory of the bullet, as described in greater detail below. Furthermore, at ranges other than the range at which the firearm was zeroed, particularly ranges well beyond the zeroing range, the actual point of impact of the bullet may be different than the point of impact indicated by the reticle because the line of sight of the scope has diverged from the bullet trajectory.

Ambient, or external, factors also have an increasing effect on the trajectory of a bullet as shooting range increases. One such factor is gravity, which causes "bullet drop." Bullet drop is characterized by a bullet path which curves toward the earth over long ranges as the bullet falls to the ground. To hit a target at long range, therefore, it is necessary to compensate for bullet drop by elevating the barrel of the firearm, and, thus, the aiming point. Wind is another ambient factor that can influence bullet trajectory. Wind can cause the bullet to drift to the left or to the right of the central path of the bullet over a long range. Such effects are commonly referred to as "windage" effects. To hit a target at long range, therefore, it may be necessary to compensate for windage effects by moving the barrel of the firearm slightly to the left or to the right to compensate for bullet drift. Other ambient factors that may affect the trajectory of a bullet include firearm inclination, barometric pressure, humidity, altitude and temperature.

Ballistics, or the internal actions and characteristics of the firearm, also affect bullet trajectory and must be compensated for at long ranges. Ballistics include such factors as the weight, size (caliber), shape and grain of the bullet; firearm barrel characteristics; and muzzle velocity, or the speed at which the bullet leaves the muzzle of the firearm. It will be appreciated that these factors vary from one firearm to another, and from one type of bullet to another.

When using a scope, then, a shooter must attempt to compensate for inaccuracies by estimating a distance to a target, estimating the effect of calibration, ambient conditions and ballistics on the bullet trajectory, and use these estimates to properly position the barrel of the firearm prior to squeezing the trigger. It will be appreciated that the inaccuracies described above may be significant enough at extreme ranges to entirely compromise the benefits of using a scope.

Devices that assist shooters in compensating for these inaccuracies are well known in the art. Laser range finders, for example, such as the YARDAGE PROT™ series of range finders sold by BUSHNELL™, assist shooters by accurately determining target range―thus eliminating the uncertainty inherent in guessing the range. With a laser range finder, the shooter merely needs to aim the rangefinder at the target, press a button, and read a range display.

Telescopic sights that assist a user in compensating for inaccuracies are also known in the art. The "mildot" reticle, for example, uses small, evenly-spaced dots to assist a shooter in determining a target range. The mildot reticle requires a shooter to know the approximate size of the target, and to know and apply a mathematical formula for determining the range. Once the range is determined, the shooter must estimate the amount of compensation necessary to compensate for deviations in the bullet trajectory. More sophisticated telescopic sights go further in helping the shooter to compensate for such deviations.

U.S. Patent No. 6,269,581 (the '581 patent), for example, discloses a telescopic sight that employs an integral laser range finder and processor to calculate the amount of compensation necessary to correct for deviations in the bullet trajectory. The sight of the'581 patent requires the user to manually enter an altitude value and a muzzle velocity, while the sight determines a target range using the laser range finder. Using the values manually entered by the user and the target range, the sight calculates a compensation and presents a second set of crosshairs that assist the user in compensating for bullet trajectory deviations by indicating the point of impact of the bullet in light of the trajectory deviations.

The prior art laser range finders and scopes are subject to several undesirable limitations. First, they fail to include factors that may contribute to deviations in the bullet trajectory. The telescopic sight of the '581 patent, for example, does not compensate for such ambient factors as barometric pressure, windage, or humidity; nor does it compensate for scope calibration. Second, they require a shooter to be aware of and/or manually submit certain pieces of information. To effectively use the telescopic sight of the '581 patent, for example, a user must be aware of his or her altitude and submit altitude information to the sight. It will be appreciated that these limitations may result in a delayed or missed shot.

Thus, a need exists for a telescopic sight that can assist a user in compensating for deviations in a bullet trajectory arising from firearm calibration, ambient factors, and firearm ballistics by eliminating the need for the user to estimate or calculate deviation information prior to shooting. Furthermore, a need exists for a firearm scope that does not require the user to be aware of or communicate to the sight ambient condition information and target distance information.

### SUMMARY OF THE INVENTION

The present invention provides an improved telescopic sight for automatically compensating for bullet trajectory deviations that does not suffer from the problems and limitations of the prior art described above. Particularly, the present invention provides a telescopic sight with integral range finder and ambient condition sensors, wherein the sight can automatically calculate bullet trajectory deviation compensation information based on a target range and ambient conditions acquired by the sight, and calibration and ballistic information submitted by a user. The sight presents the compensation information to the user in a convenient way to allow the user to compensate for bullet trajectory deviations. The improved sight thus eliminates the need for the user to be aware of ambient condition information or target distance information, or communicate the information to the sight.

In one embodiment, the invention features a telescopic sight for automatically compensating for deviations in a bullet trajectory. The sight comprises a range finder for generating target distance information, a sensor for generating ambient condition information, a processor for calculating bullet trajectory compensation information using the target distance information and the ambient condition information, and an optical scope. The optical scope receives the compensation information from the processor, presents a magnified view of a target area to the user, and presents the compensation information to the user.

In another embodiment, the sight includes a keypad for receiving ballistic information and calibration information from the user and an electronic port for receiving the ballistic information and calibration information from an external electronic device. A laser range finder generates target distance information, wherein the distance information indicates a distance between the sight and a target. A wind sensor generates windage information, wherein the windage information includes a wind direction and a wind speed. A processor calculates bullet trajectory compensation information using the ballistic information, calibration information, targetdistance information, and windage information. Finally, an optical scope magnifies a view of a target area and presents a compensation reticle within the magnified view, wherein the compensation reticle is adjusted according to the compensation information to indicate a point of impact of the bullet.

In another embodiment, the sight includes a keypad for receiving ballistic information, calibration information, and user preference information from the user. The ballistic information includes a size, shape, grain and weight of a bullet, a muzzle velocity, and firearm barrel characteristics. The calibration information includes a range at which the sight was zeroed and a scope-barrel separation distance. The user preference information includes a list of ambient conditions to include in a bullet trajectory compensation calculation and a preferred manner of presenting compensation information to the user. An electronic port receives the ballistic information, the calibration information, and the user preference information from an external electronic device. A laser range finder generates target distance information, wherein the distance information indicates a distance between the sight and a target.

The sight may further include ambient condition sensors, including an altimeter for generating altitude information; a barometer for generating barometric pressure information; a thermometer for generating temperature information; a humidity sensor for generating humidity information; and a wind sensor for generating windage information, wherein the windage information includes a wind direction and a wind speed. A processor calculates bullet trajectory compensation information using the ballistic information, calibration information, and ambient condition information. The processor selectively uses the target distance information, altitude information, barometric pressure information, temperature information, humidity information, and windage information according to the user preference information. A nonvolatile memory element receives information from the processor, stores the information, and communicates the information to the processor. Finally, an optical scope magnifies a view of a target area and presents a compensation reticle within the magnified view, wherein the compensation reticle is adjusted according to the compensation information to indicate a point of impact of the bullet.

In another aspect, the invention features a method of assisting a user in compensating for deviations in a bullet trajectory. The method comprises the steps of receiving target distance information from a range finder, receiving ambient condition information from an ambient condition sensor, calculating bullet trajectory compensation information based on the distance information and ambient condition information, and presenting the compensation information to the user by presenting a compensation reticle within a field of view of a telescopic sight, wherein the compensation reticle is adjusted according to the compensation information to indicate a point of impact of the bullet.

In another embodiment, the method comprises the steps of communicating ballistic information to a telescopic sight via a number pad, communicating calibration information to the telescopic sight via the number pad, and communicating user preference information to the telescopic sight via the number pad. The ballistic information includes a bullet size, weight, shape and grain, a muzzle velocity, and firearm characteristics. The calibration information includes a range at which a telescopic sight was zeroed and a scope-barrel separation distance. The user setting information includes a list of ambient conditions to include in a trajectory deviation calculation, and further includes a preferred manner of presenting compensation information to the user, wherein a compensation reticle may be preferred and a numerical value may be preferred.

The method may further comprise the steps of receiving distance information from a laser range finder, wherein the distance information includes a distance to a target indicated by a fixed reticle within a field of view of the sight, and receiving ambient condition information from an ambient condition sensor housed within the sight if the condition is included in the list of ambient conditions. The method further comprises the steps of storing the ballistic information, calibration information, user preference information, distance information, and ambient condition information in a nonvolatile memory; calculating a bullet trajectory deviation compensation value based on the information solicited; and presenting the compensation value to the user by superimposing a compensation reticle over the fixed reticle within the field of view of the telescopic sight if the user preference information indicates that a compensation reticle is preferred, wherein the compensation reticle indicates a point of impact of the bullet in light of bullet trajectory deviations. Finally, the method comprises the step of presenting the compensation value to the user by superimposing a numerical value over the field of view of the telescopic sight if the user preference information indicates that a numerical value is preferred, wherein the numerical value indicates a distance between the point of impact indicated by the fixed reticle and an actual point of impact.

Other aspects and advantages of the present invention will be apparent from the following detailed description of the preferred embodiments and the accompanying drawing figures.

### BRIEF DESCRIPTION OF THE DRAWINGS

A preferred embodiment of the present invention is described in detail below with reference to the attached drawing figures, wherein:
FIG. 1 is a perspective view of a telescopic sight for automatically compensating for bullet trajectory deviations constructed in accordance with a preferred embodiment of the present invention;
FIG. 2 is a side elevation view of the telescopic sight illustrated in FIG. 1;
FIG. 3 is a schematic of components of the telescopic sight illustrated in FIG. 1;
FIG. 4 is a fragmented view of a field of view presented by the telescopic sight illustrated in FIG. 1, wherein a fixed reticle is visible;
FIG. 5 is a fragmented view of a field of view presented by the telescopic sight illustrated in FIG. 1, wherein the fixed reticle and a trajectory compensation reticle are visible;
FIG. 6 is a fragmented view of a field of view presented by the telescopic sight illustrated in FIG. 1, wherein the fixed reticle and a trajectory compensation value are visible; and
FIG. 7 is a flowchart of steps involved in a method of automatically compensating for bullet trajectory deviations.

### DETAILED DESCRIPTION OF PREFERRED EMBODIMENTS

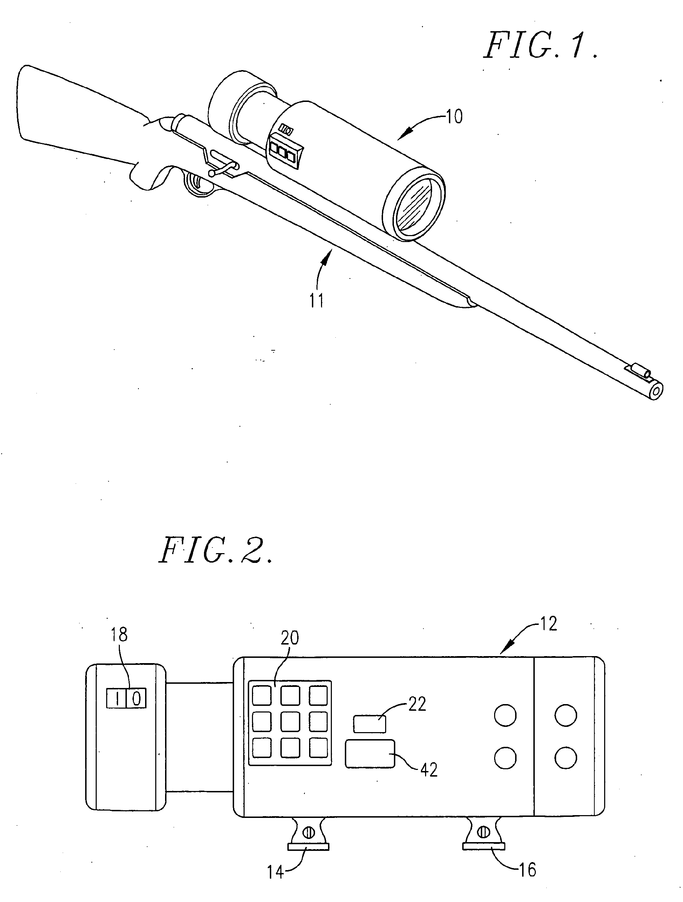

Referring to FIG. 1, a telescopic sight 10 is shown constructed in accordance with a preferred embodiment of the present invention and shown attached to a firearm 11. The sight generally assists a user in compensating for variations in a bullet trajectory by receiving calibration and ballistic information, generating ambient condition information and target distance information, calculating bullet trajectory compensation information, and presenting the compensation information to the user. As illustrated in FIGs. 2-3, the sight 10 comprises a housing 12; a power switch 18, a user input 20; an electronic port 22; a range finder 24; ambient condition sensors 26,28,30,32,34,36; a processor 38; a nonvolatile memory 40; a display 42; an optical scope 44; and a power source.

The housing generally encloses and protects the other components of the sight 10, and provides a means of attaching the sight 10 to the firearm 11. Turning now to FIG. 2, the illustrated housing 12 is substantially cylindrical in shape and is preferably constructed of plastic, aluminum or other lightweight and sturdy material. The housing 12 is large enough to contain the other components of the sight 10 but small enough to conveniently attach to a rifle or other firearm without interfering with the use or transport of the firearm 11. The housing 12 is preferably waterproof or water resistant and as such may include one or more gaskets or seals (not shown). Mounting brackets 14,16 on the housing 12 secure the sight 10 to the firearm 11 in a manner commonly known in the art. Although the illustrated housing 12 is shown and described as being substantially cylindrical in shape, it will be appreciated that the housing may be of various shapes and sizes intended for utility, aesthetic, or ergonomic purposes, including, for example, a substantially rectangular shape.

The power switch generally allows the user to activate the electronic components of the sight 10 by connecting those components to the power source, and further allows the user to deactivate the electronic components of the sight 10 by disconnecting those components from the power source. The electronic components powered by the power source collectively comprise a trajectory compensation system, which compliments the traditional functions of the telescopic sight 10 by presenting trajectory compensation information to the user, as explained below in greater detail. The illustrated power switch 18 has an "on" state and an "off" state, wherein switching the power switch to the "on" state activates the compensation system, and switching the power source to the "off" state deactivates the compensation system.

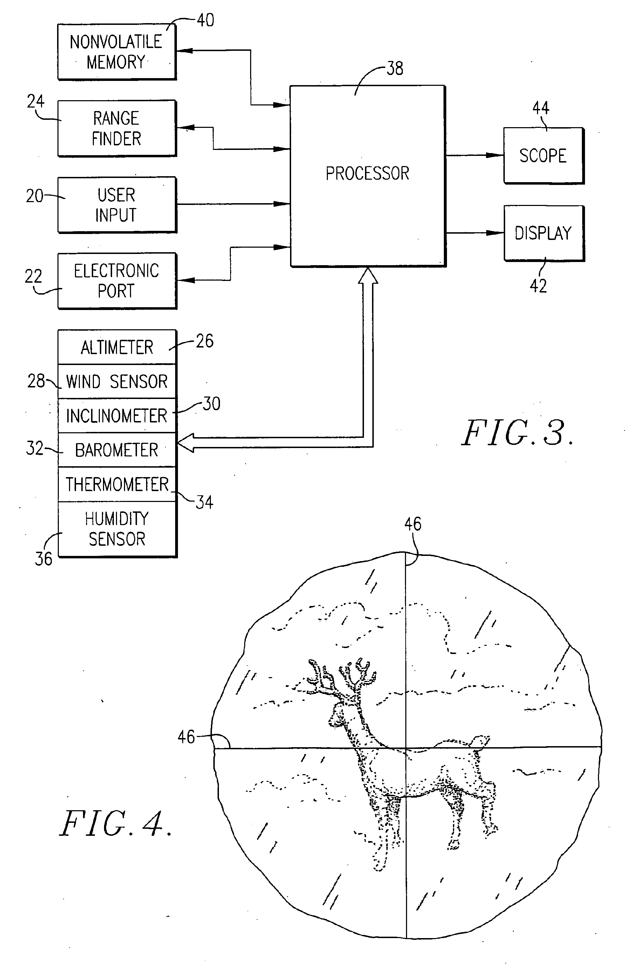

Referring also to FIG. 3, the user input generally provides a means whereby a user may communicate information, such as ballistic or calibration information, to the processor 38 and other components of the sight 10. The illustrated user input 20 includes a number pad that allows a user to communicate numerical values and other messages to the processor 38 by depressing buttons on the pad. The user input 20 may cooperate with other components of the sight 10, such as the display 42, to facilitate communications between the user and the processor 38, as explained below in greater detail. It will be appreciated that the user input may include a keypad or other type of human input device in place of or in addition to the illustrated number pad.

The electronic port generally provides means to communicatively connect the sight 10 to an external electronic device so that the sight 10 and the external device may electronically share information, such as calibration and ballistic information. The illustrated electronic port 22 comprises a Universal Serial Bus (USB) port of the type commonly found in modern computers and other electronics. The USB provides serial data communications between two devices, typically a computer and a computer peripheral device. The USB is convenient to use because devices may be connected to and removed from the bus without the need to turn off any device on the bus, a process known as "hot swapping." It will be appreciated that various types of electronic ports may be used in place of or in addition to the USB port, including, for example, an IEEE 1394 (commonly referred to as "Firewire") port, or a Bluetooth or WiFi wireless port.

The electronic port 22 greatly facilitates the communication of information to the sight 10. For example, a user may download ballistic information relating to a particular firearm or a particular type of bullet from the Internet or other computer network to a computer. The user then connects the sight 10 to the computer via the electronic port 22 and downloads the ballistic information to the sight 10. Furthermore, the user may create and store a data file on the computer that includes calibration information manually submitted by the user as well as the ballistic information downloaded from the Internet. The user may save the file, change it, and communicate it to the sight 10 via the electronic port 22 at the user's convenience.

The range finder generally determines a distance to a target and communicates that distance to the processor 38 or to the user. The illustrated range finder 24 is contained within the housing 12 and uses laser range finding technology to measure a distance to a target that is within the field of view of the optical scope 44 and indicated by a reticle of the scope 44, as explained below in greater detail. The range finder 24 measures the distance upon receiving a distance information request from the processor 38 and communicates distance information to the processor 38 or to the user.

The range finder 24 may communicate distance information to the processor 38, for example, by electronically communicating to the processor 38 an integer value representative of the distance between the sight 10 and a target in meters or yards. The range finder 24 may communicate distance information to the user, for example, by communicating an electronic signal to the display 42 that enables the display 42 to show the distance in a human readable form. It will be appreciated that the range finder may include functionality not set forth above and may use various range finding technologies or methods without departing from the scope of the present invention. For example, the range finder may use triangulation to measure the distance instead of laser range finding technology.

The ambient condition sensors generally sense a variety of ambient conditions that may affect the trajectory of a bullet, and communicate ambient condition information to the processor 38 or to the user. The illustrated ambient condition sensors include an altimeter 26, a wind sensor 28, an inclinometer 30, a barometer 32, a thermometer 34, and a humidity sensor 36. The altimeter 26 generates altitude information relating to the sight 10, such as a value representing feet above see level. The wind sensor 28 generates windage information, such as a wind vector, wherein the vector includes both a wind direction and wind speed. The inclinometer 30 generates inclination information, such as an angle at which a barrel of the firearm 11 deviates from a level position relative to the earth's surface. The barometer 32 generates barometric pressure information, such as a value in inches representing an ambient barometric pressure. The thermometer 34 generates temperature information, such as a value representing an ambient temperature at the location of the sight 10 in degrees Fahrenheit. The humidity sensor 36 generates humidity information, such as a value representing relative or absolute ambient humidity.

Each sensor preferably generates and communicates information in response to an ambient condition information request communicated by the processor 38. Limiting the operation of the ambient condition sensors in this way preserves energy that otherwise would be lost through unneeded operation of the sensors and prolongs the life of the power source of the sight 10. It will be appreciated that the list of ambient sensors described and shown is not comprehensive, and that other sensors may be used to generate information relating to ambient conditions affecting bullet trajectory.

The processor generally receives information, such as the calibration information, ballistic information, and the ambient condition information, generates bullet trajectory compensation information, and communicates the information to the user. The illustrated processor 38 is a digital computer processor and includes integral clock and memory elements (not shown) and may be a model that is commercially available. The processor 38 is operable to receive information from the user input 20 and from the electronic port 22, and to communicate information to the electronic port 22. The processor 38 is further operable to request information from the range finder 24 and from each of the ambient condition sensors 26,28,30,32,34,36. The processor 38 is further operable to store information in the nonvolatile memory 40, and to retrieve the information from the nonvolatile memory 40. The processor 38 is further operable to communicate information to the optical scope 44 and to the display 42, wherein the information is presented to the user in a human-readable form.

The nonvolatile memory generally receives and stores data, wherein the data persists while power is removed from the memory. The illustrated nonvolatile memory 40 is Flash memory and is operable to receive and store data from the processor 38, and communicate the information to the processor 38. Because the integrity of the data persists indefinitely even when power is not applied to the memory 40, the user may communicate information to the telescopic sight 10 days or weeks before using it. The nonvolatile memory 40 is preferably integral with the sight 10 and contained within the housing 12. Alternatively, the nonvolatile memory 40 may be removable.

The display generally allows the processor 38 to communicate information to the user. The illustrated display 42 is a liquid crystal display (LCD), but it will be appreciated that the display may be of any type suitable for presenting information to the user in human-readable form, such as, for example, a seven-segment LED array. The display 42 cooperates with the user input 20 in communicating with the user. For example, the display 42 may display a message prompting the user to submit a value via the user input 20, and then reflect the input that the user submits. It will be appreciated that the user input 20 and the display 42 may be combined in, for example, an LCD touchscreen.

The optical scope generally magnifies a field of view and presents the bullet trajectory deviation compensation information to the user. The illustrated optical scope 44 magnifies the field of view in a manner known in the art and superimposes a fixed reticle 46 over the field of view, as illustrated in FIG. 4. In the illustrated embodiment the fixed reticle 46 is a set of crosshairs. With respect to the fixed reticle 46, the sight 10 provides means (not shown) to calibrate, or zero, the fixed reticle in a traditional manner.

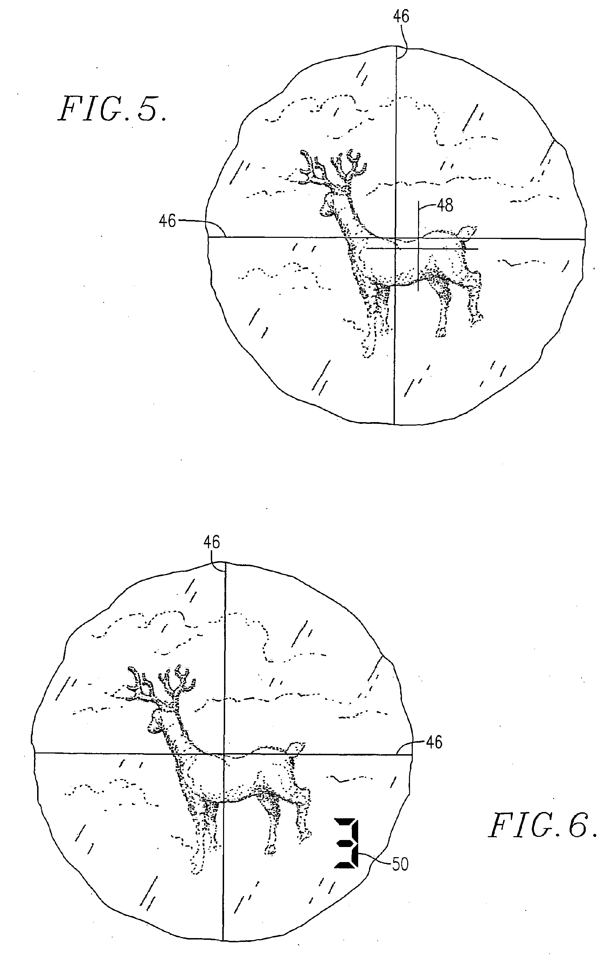

The optical scope 44 further presents the bullet trajectory compensation information to the user. The scope 44 selectively presents the compensation information to the user as a compensation reticle 48, illustrated in FIG. 5, or as a compensation value 50, illustrated in FIG. 6. The compensation reticle 48 is superimposed over the magnified field with the fixed reticle 46, and indicates the point of impact of the bullet in light of the compensation information generated by the processor 38. The compensation value 50 is also superimposed over the magnified field of view and indicates, for example, a distance in inches that an actual point of impact of the bullet deviates from the point of impact indicated by the fixed reticle 46.

In use, the user communicates ballistic information and calibration information to the telescopic sight 10. The sight 10 senses ambient conditions to generate ambient condition information and, using the information communicated by the user as well as the ambient condition information, presents bullet trajectory compensation information to the user. The user then adjusts his or her aim of the firearm 11 according to the compensation information presented by the sight 10.

It will be appreciated that the user may choose to use the sight 10 without the aide of the trajectory compensation system and rely entirely on the fixed reticle 46. To do so the user leaves the power switch 18 in the "off' position, thus leaving the compensation system deactivated. In that state, the fixed reticle 46 is visible in the field of view of the optical scope 44 and indicates a point of impact of the bullet according to the calibration of the scope 44. A user may desire to use the sight 10 without the aide of the compensation system if, for example, he or she is shooting at close ranges only. As explained above in the section entitled "DESCRIPTION OF PRIOR ART," however, the accuracy of the fixed reticle 46 may be compromised by scope calibration, ambient factors and firearm ballistics, particularly at longer ranges.

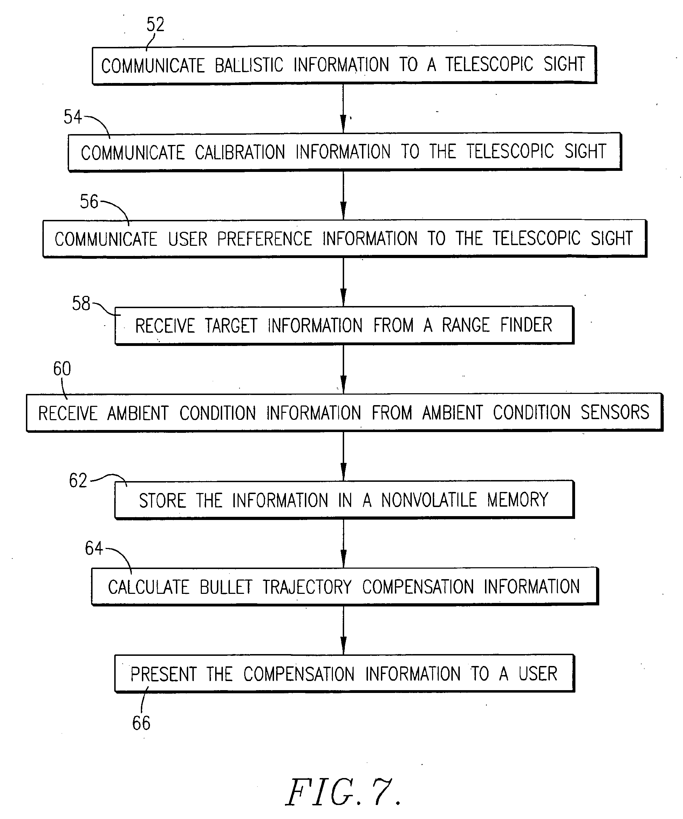

Turning now to FIG. 7, to use the trajectory compensation system of the telescopic sight 10, the user first activates the compensation system by switching the power switch 18 to the "on" position. The telescopic sight 10 then allows the user to communicate ballistic information to the sight 10, as depicted in block 52. The user communicates the information to the sight 10 via the user input 20, and the ballistic information may include a size, weight, shape and grain of a bullet; firearm barrel characteristics; and/or a muzzle velocity.

The sight 10 then allows the user to communicate calibration information to the sight 10, as depicted in block 54. The calibration information includes a distance at which a telescopic sight 10 was zeroed and a scope-barrel separation distance. As described above in the section entitled "DESCRIPTION OF PRIOR ART," the distance at which the scope 44 was zeroed is the distance from the firearm at which the fixed reticle 46 of the optical scope 44 accurately indicates the point of impact of the bullet absent ambient conditions which may arbitrarily influence the bullet's path, such as wind. This distance may be known by the user, or obtained from the manufacturer of the firearm or other person who calibrated the sight 10. The scope-barrel separation distance is the distance between the line of sight of the optical scope 44 and the path of the bullet as it leaves the muzzle of the firearm. Together, the distance at which the sight 10 was zeroed and the scope-barrel separation distance can be used to determine the rate at which the line of sight of the optical scope 10 and the trajectory of the bullet converge and diverge.

The sight 10 then allows the user to communicate user preference information to the sight 10, as depicted in block 56. The user preference information includes a list of ambient conditions to include in a trajectory deviation calculation, and further includes a preferred manner of presenting compensation information to the user. Thus, the user can control which ambient conditions the sight 10 will automatically compensate for by including only those conditions in the list. For example, a user may wish to use the wind sensor 28 only when there is a reliable indication that the wind conditions are uniform between the user and the target.

The preferred manner of presenting compensation information may be via the compensation reticle 48, via the numerical value 50, or both. The compensation reticle 48 indicates a point of impact of the bullet taking into account the bullet trajectory compensation information calculated by the processor 38. The compensation reticle 48, preferably a set of crosshairs, has the advantage of being very convenient and easy to use. To further facilitate use, the compensation reticle 48 may be, for example, of a different color than the fixed reticle 46.

The numerical value 50 communicates to the user a distance between the point of impact of the bullet indicated by the fixed reticle 46 and an actual point of impact of the bullet. The value "3," for example, displayed in FIG. 6, may indicated that the actual point of impact of the bullet will be three inches below the point of impact indicated by the fixed reticle 46. It will be appreciated that there are various ways of numerically representing the trajectory deviation value that are within the scope of the invention. The numerical value may be positive or negative, for example, wherein a positive number represents a distance above a point indicated by a horizontal crosshair or to the right of a point indicated by a vertical crosshair, and a negative number represents a distance below the point indicated by the horizontal crosshair or to the left of the point indicated by the vertical crosshair, or vice versa. Furthermore, a first numerical value may be placed near the horizontal crosshair to represent a distance from the point indicated by the horizontal crosshair, and a second numerical value may be placed near the vertical crosshair to represent a distance from the point represented by the vertical crosshair.

The user may communicate the ballistic information, the calibration information, and the user preference information to the sight 10 just before shooting, or may communicate the information well in advance of using the sight 10. A user may desire to communicate the information to the sight 10 on the night before a hunt, for example, or even days or weeks before the hunt. In that case the user activates the compensation system of the sight 10 and communicates the information to the sight 10, as described above, and then turns off the compensation system. The information is stored in the nonvolatile memory 40 and therefore is available when the system is activated again. Furthermore, while it is preferred that the user submit the ballistic, calibration, and preference information, it will be appreciate that such information is not necessary to the operation of the sight 10 and the sight may be used without submitting such information, although accuracy may be at least partially compromised if the information is omitted.

When the user is targeting an object, the sight 10 acquires target distance information and ambient condition information for use in calculating the bullet trajectory deviation. The processor 38 first solicits target distance information from the range finder 24, as depicted in block 58. This may be done, for example, by communicating an electronic signal to the range finder 24. Upon receiving the request for target distance information, the range finder 24 acquires a distance to the target indicated by the fixed reticle 46 of the optical scope 44, as explained above in greater detail. Upon acquiring the target distance information, the range finder 24 communicates the information to the processor 38 via an electronic signal.

The processor 38 also solicits ambient condition information from one or more of the ambient condition sensors 26,28,30,32,34,36, as depicted in block 60. The processor 38 reviews the list of sensors included in the user preference information and solicits information only from those sensors included in that list. The processor 38 solicits the information from the sensors by communicating an electronic signal to each of the sensors included in the list. Each of the sensors that is solicited senses an ambient condition according to the functionality explained above. Upon acquiring the ambient condition information, each sensor communicates the information to the processor 38 via an electronic signal.

After receiving the ballistic information, the calibration information, the user preference information, the target distance information, and the ambient condition information, the processor 38 stores all of the information in the nonvolatile memory 40, as depicted in block 62. It will be appreciated that the processor 38 need not store the information in the nonvolatile memory 40 to perform the calculations, as the information may be stored in a memory (not shown) integral with the processor 38 for faster processing. Storing the information in the nonvolatile memory 40, however, ensures that the information will be available even after the sight 10 is turned off or there is otherwise a disruption of power to the processor 38.

After all of the information has been received, the processor 38 calculates bullet trajectory deviation compensation information based on the information, as depicted in block 64. The compensation information indicates a distance or distances from the point of impact of a bullet indicated by the fixed reticle the actual impact will be, in light of the various pieces of information generated by the sensors and communicated by the user. The compensation information preferably includes two values, a horizontal distance and a vertical distance. The horizontal distance is the distance in inches the actual point of impact will be on the target above or below a horizontal crosshair, while the vertical distance is the distance in inches the actual point of impact will be on the target to the left or to the right of a vertical crosshair. Alternatively, the compensation information may include a vector, such as a direction and a distance, wherein the direction is a direction of the actual point of impact from the point of impact indicated by the fixed reticle 44 and the distance is the distance between the two points.

Methods of calculating bullet trajectory deviation information from ballistic, calibration and ambient condition information are known in the art. The processor 38 may use algorithms corresponding to any of the methods to calculate the compensation information.

After calculating the compensation information, the processor 38 presents the information to the user, as depicted in block 66. The compensation information may be presented to the user as a compensation reticle 48, a compensation value 50, or both. The compensation reticle 48, illustrated in FIG. 5, is a second reticle superimposed over the field of view of the optical scope 44 that indicates a point of impact of the bullet in light of the compensation information. In FIG. 5, the user would aim the firearm to place the compensation over the desired point of impact. The compensation value 50 is also presented to the user within the field of view of the optical scope 44 and is depicted in FIG. 6. Alternatively, the compensation value may be presented to the user via the display 42. It will be appreciated that the compensation reticle 48 and the compensation value 50 may take various forms and be presented to the user in various manners. The compensation reticle, for example, need not be a set of crosshairs, but may be another type of reticle, such as a circle-x.

Use of the telescopic sight 10 has been described as requiring the user to manually submit various pieces of information via the user input 20. Alternatively, the ballistic information, calibration information, and the user preference information may be stored in a computer file and communicated to the sight 10 electronically via the electronic port 22. For example, a user may download ballistic information relating to a particular firearm or a particular type of bullet to a computer and store the information in a computer file. The user may then add calibration information and user preference information to the file and save the file to a storage medium within the computer. The user could then update the file with new information or communicate the file to the sight 10 at the user's convenience.

Although the invention has been described with reference to the preferred embodiments illustrated in the attached drawings, it is noted that equivalents may be employed and substitutions made herein without departing from the scope of the invention as recited in the claims. It will be appreciated, for example, that the telescopic sight 10 may include switches on the housing 12 dedicated to user preferences, thus eliminating the need to communicate the preferences via the user input 20 or the electronic port 22.

Having thus described the preferred embodiment of the invention, what is claimed as new and desired to be protected by Letters Patent includes the following:

## Claims

1. A telescopic sight for automatically compensating for deviations in a bullet trajectory, the sight comprising:
a range finder for generating target distance information;
a sensor for generating ambient condition information;
a processor for calculating bullet trajectory compensation information using the target distance information and the ambient condition information; and
an optical scope for receiving the compensation information from the processor, presenting a magnified view of a target area to a user, and presenting the compensation information to the user.

2. The telescopic sight as set forth in claim 1, wherein the optical scope presents a compensation reticle within the view of the target area, wherein the compensation reticle is adjusted according to the compensation information to indicate a point of impact of the bullet.

3. The telescopic sight as set forth in claim 2, wherein the optical scope further presents a fixed reticle within the view of the target area.

4. The telescopic sight as set forth in claim 3, wherein the target distance information includes a distance from the sight to a point of impact indicated by the fixed reticle.

5. The telescopic sight as set forth in claim 3, wherein the fixed reticle and the compensation reticle include crosshairs.

6. The telescopic sight as set forth in claim 1, further including a user input for receiving ballistic information, calibration information, and user preference information from the user and communicating the information to the processor.

7. The telescopic sight as set forth in claim 6, wherein the user input is chosen from the group consisting of a keypad, a number pad, and a touchscreen.

8. The telescopic sight as set forth in claim 6, wherein the ballistic information includes a size, shape, grain and weight of a bullet, a muzzle velocity, and firearm barrel characteristics.

9. The telescopic sight as set forth in claim 8, wherein the calibration information includes a range at which the sight was zeroed and a scope-barrel separation distance.

10. The telescopic sight as set forth in claim 9, wherein the user preference information includes a list of ambient conditions to include in a trajectory compensation calculation and a preferred manner of presenting compensation information to the user.

11. The telescopic sight as set forth in claim 1, wherein the sensor is an altimeter for generating altitude information.

12. The telescopic sight as set forth in claim 11, further including an inclinometer for generating inclination information, wherein the inclination information includes an angle of inclination of the firearm barrel relative to the earth's surface and the processor uses the inclination information to calculate the compensation information.

13. The telescopic sight as set forth in claim 12, further including a wind sensor for generating windage information, wherein the windage information includes a wind direction and a wind speed and the processor uses the windage information to calculate the compensation information.

14. The telescopic sight as set forth in claim 13, further including a barometer for generating barometric pressure information, wherein the processor uses the barometric pressure information to calculate the compensation information.

15. The telescopic sight as set forth in claim 14, further including a thermometer for generating ambienttemperature information, wherein the processor uses the temperature information to calculate the compensation information.

16. The telescopic sight as set forth in claim 1, further comprising an electronic port for receiving the ballistic information, the calibration information, and the user preference information from an external electronic device.

17. The telescopic sight as set forth in claim 16, wherein the electronic port is a Universal Serial Bus port.

18. The telescopic sight as set forth in claim 16, wherein the electronic port is chosen from the group consisting of a Bluetooth wireless port and a WiFi wireless port.

19. The telescopic sight as set forth in claim 1, further comprising a nonvolatile memory element for receiving information from the processor, storing the information, and communicating the information to the processor.

20. A telescopic sight for automatically compensating for deviations in a bullet trajectory, the sight comprising:
a keypad for receiving ballistic information and calibration information from a user;
an electronic port for receiving the ballistic information and calibration information from an external electronic device;
a laser range finder for generating target distance information, wherein the distance information indicates a distance between the sight and a target;
a wind sensor for generating windage information, wherein the windage information includes a wind direction and a wind speed;
a processor for calculating bullet trajectory compensation information using the ballistic information, calibration information, target distance information, and windage information; and
an optical scope for magnifying a view of a target area and presenting a compensation reticle within the magnified view, wherein the compensation reticle is adjusted according to the compensation information to indicate a point of impact of the bullet.

21. The telescopic sight as set forth in claim 20, further including an altimeter for generating altitude information wherein the processor uses the altitude information to calculate the bullet trajectory information.

22. The telescopic sight as set forth in claim 21, further including an inclinometer for generating inclination information, wherein the inclination information includes an angle of inclination of the firearm barrel relative to the earth's surface and the processor uses the inclination information to calculate the compensation information.

23. The telescopic sight as set forth in claim 22, further including a barometer for generating barometric pressure information wherein the processor uses the barometric pressure information to calculate the compensation information.

24. The telescopic sight as set forth in claim 23, further including a thermometer for generating temperature information wherein the processor uses the temperature information to calculate the compensation information.

25. A telescopic sight for automatically compensating for deviations in a bullet trajectory, the sight comprising:
a keypad for receiving ballistic information, calibration information, and user preference information from a user, wherein the ballistic information includes a size, shape, grain and weight of a bullet, a muzzle velocity, and a firearm barrel characteristics, wherein the calibration information includes a range at which the sight was zeroed and a scope-barrel separation distance, and wherein the user preference information includes a list of ambient conditions to include in a bullet trajectory compensation calculation and a preferred manner of presenting compensation information to the user;
an electronic port for receiving the ballistic information, the calibration information, and the user preference information from an external electronic device;
a laser range finder for generating target distance information, wherein the distance information indicates a distance between the sight and a target;
an altimeter for generating altitude information;
a barometer for generating barometric pressure information;
a thermometer for generating temperature information;
a humidity sensor for generating humidity information;
a wind sensor for generating windage information, wherein the windage information includes a wind direction and a wind speed;
a processor for calculating bullet trajectory deviation compensation information using the ballistic information and calibration information, and selectively using the target distance information, altitude information, barometric pressure information, temperature information, humidity information, and windage information according to the user preference information;
a nonvolatile memory element for receiving information from the processor, storing the information, and communicating the information to the processor;
an optical scope for magnifying a view of a target area and presenting a compensation reticle within the magnified view, wherein the compensation reticle is adjusted according to the compensation information to indicate a point of impact of the bullet.

26. The telescopic sight as set forth in claim 25, the optical scope further including a fixed reticle.

27. The telescopic sight as set forth in claim 26, wherein the compensation reticle is a different color than the fixed reticle.

28. The telescopic sight as set forth in claim 26, wherein the compensation reticle presents a different pattern than the fixed reticle.

29. The telescopic sight as set forth in claim 27, wherein the optical scope presents the compensation reticle if the user preference information indicates that a compensation reticle is preferred, and presents a compensation value to the user by superimposing a numerical value over the field of view if the user preference information indicates that a numerical value is preferred.

30. A method of automatically compensating for deviations in a bullet trajectory, the method comprising the steps of:
(a) receiving target distance information from a range finder;
(b) receiving ambient condition information from an ambient condition sensor;
(c) calculating bullet trajectory compensation information based on the distance information and ambient condition information; and
(d) presenting the compensation information to the user by presenting a compensation reticle within a field of view of a telescopic sight, wherein the compensation reticle is adjusted according to the compensation information to indicate a point of impact of the bullet.

31. The method as set forth in claim 30, further comprising the step of:
(e) receiving ballistic information from the user and using the ballistic information to calculate the compensation information.

32. The method as set forth in claim 31, step (e) further comprising the step of receiving a size, weight, shape and grain of a bullet, a muzzle velocity, and firearm barrel characteristics from the user to calculate the compensation information.

33. The method as set forth in claim 30, further comprising the step of:
(f) receiving calibration information from the user and using the calibration information to calculate the compensation information.

34. The method as set forth in claim 33, step (f) further comprising the step of receiving from the user a value representing a range at which a telescopic sight was zeroed and a value representing a scope-barrel separation distance and using the values to calculate the compensation information.

35. The method as set forth in claim 30, further comprising the step of:
(g) receiving user preference information from the user and using the user preference information to calculate the compensation information and to present the compensation information to the user.

36. The method as set forth in claim 35, step (g) further comprising the step of receiving from the user a list of ambient conditions to include in a trajectory deviation calculation.

37. The method as set forth in claim 36, step (b) further comprising the step of selectively receiving ambient condition information from a sensor chosen from the group consisting of an altimeter, a wind sensor, an inclinometer, a barometer, a thermometer, and a humidity sensor.

38. The method as set forth in claim 35, step (g) further comprising the step of receiving from the user a preferred manner of presenting compensation information to the user, wherein a compensation reticle may be preferred and a numerical value may be preferred.

39. The method as set forth in claim 38, further comprising the step of:
(h) presenting the compensation value to the user by presenting a compensation reticle within the field of view of the telescopic sight if the user preference information indicates that a compensation reticle is preferred.

40. The method as set forth in claim 39, further comprising the step of:
(i) presenting the compensation value to the user by presenting a numerical value within the field of view of the telescopic sight if the user preference information indicates that a numerical value is preferred.

41. The method as set forth in claim 30, step (a) further comprising the step of receiving target distance information from a laser range finder and using the target distance information to calculate the compensation information.

42. The method as set forth in claim 30, step (a) further comprising the step of receiving target distance information from a triangulation range finder.

43. The method as set forth in claim 30, further comprising the step of:
(j) downloading ballistic information from the Internet to a computer, wherein the ballistic information includes a size, weight, shape and grain of a bullet, firearm barrel characteristics, and muzzle velocity.

44. The method as set forth in claim 43, further comprising the step of:
(k) saving the ballistic information in a computer file on the computer.

45. The method as set forth in claim 44, further comprising the step of:
(I) allowing the user to add calibration information to the computer file, wherein the calibration information includes a distance at which a telescopic sight was zeroed and a scope-barrel separation distance.

46. The method as set forth in claim 45, further comprising the step of:
(m) allowing the user to add user preference information to the computer file, wherein the user preference information includes a list of ambient conditions to include in a trajectory deviation calculation and a preferred manner of presenting compensation information to the user, wherein a compensation reticle may be preferred and a numerical value may be preferred.

47. The method as set forth in claim 46, further comprising the step of:
(n) electronically communicating the computer file to the telescopic sight.

48. The method as set forth in claim 47, further comprising the step of:
(o) storing the computer file in a nonvolatile memory in the telescopic sight.

49. A method of automatically compensating for deviations in a bullet trajectory, the method comprising the steps of:
(a) communicating ballistic information to a telescopic sight via a number pad, wherein the ballistic information includes a size, weight, shape and grain of a bullet and a muzzle velocity of a firearm;
(b) communicating calibration information to the telescopic sight via the number pad, wherein the calibration information includes a range at which a telescopic sight was zeroed and a scope-barrel separation distance;
(c) communicating user preference information to the telescopic sight via the number pad, wherein the user preference information includes a list of ambient conditions to include in a trajectory deviation calculation, and further includes a preferred manner of presenting compensation information to the user, wherein a compensation reticle may be preferred and a numerical value may be preferred;
(d) receiving distance information from a laser range finder, wherein the distance information includes a distance to a target indicated by a fixed reticle within a field of view of the sight;
(e) receiving ambient condition information from an ambient condition sensor housed within the sight if the condition is included in the list of ambient conditions;
(f) storing the ballistic information, calibration information, user preference information, distance information, and ambient condition information in a nonvolatile memory;
(g) calculating bullet trajectory deviation compensation information using the ballistic information, calibration information, and ambient condition information;
(h) presenting the compensation information to the user by superimposing a compensation reticle over the fixed reticle within the field of view of the telescopic sight if the user preference information indicates that a compensation reticle is preferred, wherein the compensation reticle indicates a point of impact of the bullet in light of bullet trajectory deviations; and
(i) presenting the compensation value to the user by superimposing a numerical value over the field of view of the telescopic sight if the user preference information indicates that a numerical value is preferred, wherein the numerical value indicates a distance between the point of impact indicated by the fixed reticle and an actual point of impact.
